# DEMANDE DE BREVET EUROPEEN

(11) **EP 1 174 647 A1**
(43) Date de publication de la demande: **23.01.2002**
(21) Numéro de dépôt: 01401813.9
(22) Date de dépôt: 06.07.2001
(51) Int. Cl.: F16H 63/20, F16H 63/30

(54) **Boîte de vitesses comportant un dispositif de crabotage à échappement**

(30) Priorité: 21.07.2000 FR 0009573
(71) Demandeur: Renault, 92100 Boulogne Billancourt (FR)
(72) Inventeur: Rouyer, Johan, 92800 Puteaux (FR); Prenel, Jean-Marc, 78000 Versailles (FR)

(57) **Abrégé**

Boîte de vitesses de véhicule automobile, dont chaque pignon fou peut être craboté par l'intermédiaire d'une fourchette (26, 28, 34, 38) de commande comportant une fourche (42, 44, 46, 48) de contact, qui est susceptible de recevoir au moins un doigt (20, 22, 24) radial porté par le corps cylindrique (16) d'un actionneur (18) qui est mobile en coulissement pour la sélection d'une fourche (42, 44, 46, 48) et qui est mobile en rotation l'actionner et provoquer le crabotage dudit pignon fou, caractérisée en ce que l'actionneur comporte un premier doigt (20) qui est susceptible de commander le crabotage d'au moins deux pignons fous associés à au moins deux fourchettes principales (26, 28) indépendantes et des deuxième (22) et troisième (24) doigts qui sont chacun associés respectivement au crabotage de pignons fous associés à deux fourchettes supplémentaires (34, 38) indépendantes, et en ce que la boîte comporte des moyens d'échappement permettant aux autres doigts de quitter leurs fourches lorsqu'un doigt actionne une fourche déterminée.

## Description

L'invention concerne une boîte de vitesses de véhicule automobile.

L'invention concerne plus particulièrement une boîte de vitesses de véhicule automobile, du type comportant au moins deux arbres parallèles entre lesquels sont agencés au moins quatre engrenages constitués chacun d'un pignon fou engrenant en permanence avec un pignon fixe associé, et du type dans lequel chaque pignon fou est susceptible d'être craboté sur son arbre par l'intermédiaire d'une extrémité d'une fourchette de commande dont l'autre extrémité libre comporte une fourche de contact, qui est susceptible de recevoir au moins un doigt qui s'étend radialement à partir du corps cylindrique d'un actionneur, qui est susceptible d'être commandé en coulissement le long de son axe pour sélectionner au moins une fourche associée à une fourchette, puis d'être commandé en rotation autour de son axe pour pousser la fourche suivant un direction de mobilité de la fourchette et dans un sens déterminé et engager ainsi le rapport associé à la fourche et au sens déterminé.

On connaît de nombreux exemples de boîtes de vitesses de ce type.

Dans un véhicule automobile comportant une boîte de vitesses à commande manuelle, l'actionnement du levier de changement de vitesses est opéré conformément à une grille de changement de vitesses. La sélection des rapports peut être obtenue en déplaçant le levier par rapport à la grille transversalement jusqu'à une position de sélection d'au moins un rapport, et l'engagement de ce rapport peut être obtenu en déplaçant le levier longitudinalement dans un sens déterminé à partir de ladite position de sélection.

Conventionnellement, il existe deux types principaux de grilles de changement de vitesses adaptées à la commande du changement des rapports d'une boîte comportant un nombre impair de rapports de marche avant et un rapport de marche arrière.

En premier lieu, il existe des grilles de changement des vitesses dites "en chandelier". De telles grilles comportent des paires de rapports qui sont agencées transversalement de part et d'autre d'un point central dit "de point mort". Les rapports de chaque paire de rapports sont agencés longitudinalement, de part et d'autre d'une ligne transversale de sélection passant par le point central de point mort, suivant une ligne dite de crabotage. La grille comporte aussi des rapports indépendants agencés transversalement de part et d'autre de la position de point mort.

Ainsi, dans le cas d'une boîte de vitesses comportant cinq rapports de démultiplication, un rapport de marche avant, notamment le cinquième rapport de marche avant et le rapport de marche arrière sont décalés aux extrémités transversales de la grille. Dans ce cas, deux lignes de crabotage sont associées à ces seuls rapports.

Une telle grille de changement des vitesses est particulièrement encombrante transversalement.

En second lieu, il existe des grilles de changement des vitesses dites "en H".

De telles grilles comportent uniquement des paires de rapports qui sont agencées transversalement de part et d'autre du point central dit "de point mort". Les rapports de chaque paire sont agencés longitudinalement, de part et d'autre de la ligne transversale de sélection passant par le point central de point mort, suivant une ligne associée dite de crabotage.

Dans une telle grille de sélection, au moins un rapport de marche avant et le rapport de marche avant sont agencés sur une même ligne de crabotage. Ainsi, par exemple, pour une boîte à cinq rapports de marche avant, le rapport de marche arrière est conventionnellement placé sur la même ligne de crabotage que le premier rapport de marche avant ou le cinquième rapport de marche avant.

Or, de manière connue, si deux rapports de marche avant peuvent être engagés par un seul crabot double, en revanche, comme le rapport de marche arrière procède d'une inversion du sens de rotation par rapport à un rapport de marche avant, il nécessite d'être actionné par un dispositif de crabotage indépendant qui ne saurait être le même que celui d'un des rapport de marche avant situé sur la même ligne. Par exemple, il doit être craboté par une fourchette qui commande le déplacement d'un pignon surnuméraire permettant d'inverser le sens de rotation de l'arbre de sortie de la boîte. De ce fait, dans une telle boîte, le mouvement du levier selon ses deux positions longitudinales extrêmes opposées doit permettre de commander deux dispositifs indépendants de crabotage.

Il est connu de l'état antérieur de la technique de proposer une boîte de vitesses "en H" à cinq rapports comportant un actionneur unique qui commande les différentes fourchettes associées au crabotage des rapports. Dans une telle boîte de vitesses, l'actionneur commande directement des fourchettes principales associées chacune à une paire de rapports de la boîte. Ainsi, l'actionneur commande directement une fourchette principale associée aux premier et deuxième rapports de marche avant et une fourchette principale associée aux troisième et quatrième rapports de marche avant.

Par ailleurs, le cinquième rapport de marche avant et le rapport de marche arrière sont placés sur une même ligne de crabotage de la grille de changement de vitesses et correspondent à une position transversale déterminée du levier sur la ligne de sélection. De ce fait, la position de crabotage de l'un de ces rapports ne diffère de la position de crabotage de l'autre rapport que par la position opposée de l'actionneur le long de la même ligne de crabotage. Ainsi, par exemple, si l'actionneur est un actionneur rotatif et coulissant, dont le coulissement permet la sélection des fourchettes et dont la rotation permet le crabotage des rapports, le crabotage du cinquième rapport de marche avant ne diffère du crabotage rapport de marche arrière que par le sens de rotation de l'actionneur. De ce fait, il importe de pouvoir désaccoupler l'actionneur d'une fourchette pouvoir actionner l'autre fourchette.

Ceci est généralement réalisé par l'intermédiaire d'un dispositif d'accouplement ou de désaccouplement qui est interposé entre l'actionneur et une des fourchettes. Ainsi, par exemple, ce dispositif d'accouplement permet d'accoupler la fourchette du rapport qui doit être craboté à l'actionneur préalablement au crabotage du rapport considéré, et/ou de désaccoupler la fourchette du rapport qui ne doit pas être craboté à l'actionneur préalablement au crabotage du rapport désiré.

Un tel dispositif d'accouplement augmente considérablement la complexité de la commande d'une telle boîte de vitesses.

Pour remédier à cet inconvénient, l'invention propose une boîte de vitesses du type décrit précédemment dans laquelle l'actionneur est susceptible de commander directement chacune des fourchettes de la boîte de vitesses.

Dans ce but, l'invention propose une boîte de vitesses du type décrit précédemment, caractérisée en ce que l'actionneur comporte trois doigts dont un premier doigt est susceptible de commander le crabotage d'au moins deux pignons fous associés à au moins deux fourchettes principales indépendantes et dont des deuxième et troisième doigts sont chacun associés respectivement au crabotage de pignons fous associés à deux fourchettes supplémentaires indépendantes, et en ce que la boîte comporte des moyens mécaniques d'échappement destinés à permettre aux autres doigts, lorsqu'un doigt actionne une fourche déterminée pour craboter un pignon fou associé, de sortir des fourches autres que la fourche déterminée.

Selon d'autres caractéristiques de l'invention:
- les extrémités libres des fourchettes présentent la forme de plaques parallèles qui sont mobiles les unes par rapport aux autres dans des plans parallèles transversalement par rapport à la direction axiale de l'actionneur et aux bords desquelles sont agencées des découpes délimitant les fourches dans lesquelles sont reçus les doigts,
- les moyens mécaniques d'échappement comportent au moins un jeu axial d'échappement qui est agencé, suivant la direction de coulissement de l'actionneur, entre l'ensemble des plaques des fourchettes principales et l'ensemble des plaques des fourchettes supplémentaires et dont la valeur correspond à la valeur maximale de l'encombrement, pris suivant la direction axiale de l'actionneur, qu'est susceptible d'occuper l'ensemble des plaques des fourchettes principales ou l'ensemble des plaques des fourchettes supplémentaires, et qui est destiné à ce que le premier doigt ne puisse être reçu dans l'une ou l'autre des fourches des fourchettes principales dès lors que les deuxième et troisième doigts sont tous deux situés axialement au niveau des fourches des fourchettes supplémentaires, et réciproquement,
- les plaques des fourchettes principales et une des plaques des fourchettes supplémentaires sont montées coulissantes suivant une direction perpendiculaire à l'axe de rotation de l'actionneur et l'autre plaque des fourchettes supplémentaires est montée pivotante autour d'un axe qui est décalé parallèlement à l'axe de rotation de l'actionneur,
- chaque découpe présente sensiblement la forme d'un U et en ce que l'extrémité de chaque doigt comporte une touche en forme de portion de cylindre dont l'axe est parallèle à l'axe de l'actionneur et dont le diamètre correspond à l'écartement des branches du U de la fourche associée, pour que chaque doigt soit reçu sans jeu entre les branches de la fourche associée pendant au moins une partie de la course de rotation de l'actionneur, de manière à permettre l'entraînement de la fourchette associée en position de crabotage et son rappel en position de repos,
- les deuxième et troisième doigts sont respectivement associés aux commandes des plaques coulissante et pivotante des fourchettes supplémentaires,
- les moyens d'échappement comportent:
   ◆ un angle dit d'échappement, pris dans un plan transversal à la direction axiale de l'actionneur, entre les deuxième et troisième doigts, qui est inférieur à un angle dit de repos qui est formé, dans la position de repos des fourchettes supplémentaires pour laquelle aucun rapport n'est engagé, par les directions générales des fourches en U des fourchettes supplémentaires, et
   ◆ une configuration dite d'échappement des fourches en U des fourchettes supplémentaires, selon laquelle :
      - la direction générale de la fourche en U de la plaque pivotante coupe l'axe de rotation de ladite plaque pivotante, et
      - la branche (46b) de la fourche (46) en U de la plaque coulissante qui est tournée du côté de l'axe (Z) de rotation de la plaque pivotante est plus courte que l'autre branche (46a) de ladite fourche (46) pour fournir un dégagement sur le bord de ladite plaque coulissante, de manière que, lors de la rotation de l'actionneur, le deuxième doigt quitte la fourche de la fourchette supplémentaire associée dès lors que le troisième doigt vient au contact d'au moins une branche de la fourche en U de la fourchette supplémentaire associée, et réciproquement.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'une grille de changement de vitesses dite "en chandelier" ;
- la figure 2 est une représentation schématique d'une grille de changement de vitesses dite "en H" ;
- la figure 3 est une vue en perspective de l'actionneur et des fourchettes d'une boîte de vitesses selon l'invention ;
- la figure 4 est une vue en coupe par le plan B-B de la figure 3 représentant l'agencement des doigts des fourchettes supplémentaires en position de repos de l'actionneur ;
- les figures 5 à 7 sont des vues en coupe par le plan A-A de la figure 3 représentant une position de point mort de l'actionneur et deux positions opposées de l'actionneur dans lesquelles le premier doigt actionne une fourchette principale ;
- la figure 8 est une vue en coupe par le plan B-B de la figure 3 représentant une position de point mort de l'actionneur dans laquelle les deuxième et troisième doigts sont reçus dans leurs fourchettes supplémentaires respectives ;
- la figure 9 est une vue en coupe par le plan C-C de la figure 3 représentant une position de point mort de l'actionneur dans laquelle les deuxième et troisième doigts sont reçus dans leurs fourchettes supplémentaires respectives ;
- la figure 10 est une vue de détail en section par le plan B-B de la figure 3 représentant, selon la position de point mort de l'actionneur représentée à la figure 8, la position du deuxième doigt dans la fourche de la fourchette supplémentaire associée ;
- la figure 11 est une vue de détail en section par le plan C-C de la figure 3 représentant, selon la position de point mort de l'actionneur représentée à la figure 8, la position du troisième doigt dans la fourche de la fourchette supplémentaire associée ;
- la figure 12 est une vue en coupe par le plan B-B de la figure 3 représentant une position de l'actionneur dans laquelle le deuxième doigt actionne la fourchette supplémentaire associée ;
- la figure 13 est une vue de détail en section par le plan B-B de la figure 3 représentant la position de l'actionneur selon la figure 12 dans laquelle le deuxième doigt actionne la fourchette supplémentaire associée ;
- la figure 14 est une vue de détail en section par le plan C-C de la figure 3 représentant la position de l'actionneur selon la figure 12 dans laquelle le troisième doigt s'échappe de la fourchette supplémentaire associée ;
- la figure 15 est une vue en coupe par le plan C-C de la figure 3 représentant une position de l'actionneur dans laquelle le troisième doigt actionne la fourchette supplémentaire associée ;
- la figure 16 est une vue de détail en section par le plan C-C de la figure 3 représentant la position de l'actionneur selon la figure 15 dans laquelle le troisième doigt actionne la fourchette supplémentaire associée ; et
- la figure 17 est une vue de détail en section par le plan B-B de la figure 3 représentant la position de l'actionneur selon la figure 15 dans laquelle le deuxième doigt s'échappe de la fourchette supplémentaire associée ;

Dans la description qui va suivre, des chiffres de référence identiques désignent des pièces identiques ou ayant des fonctions similaires.

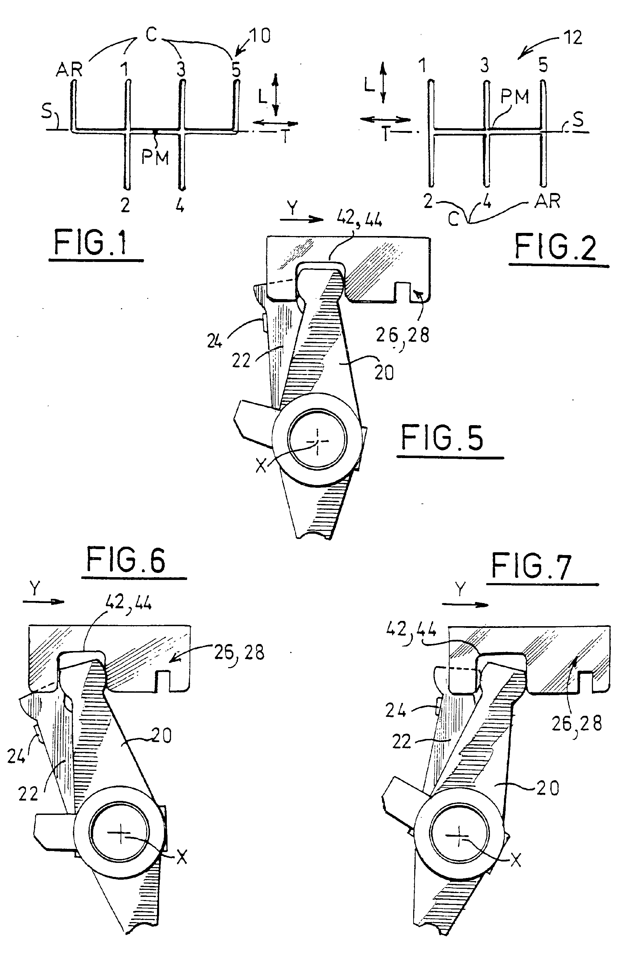

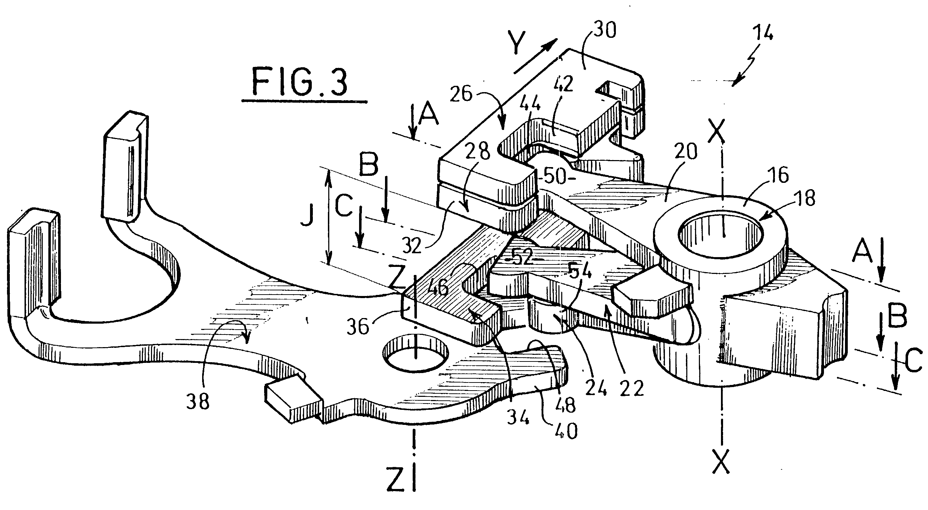

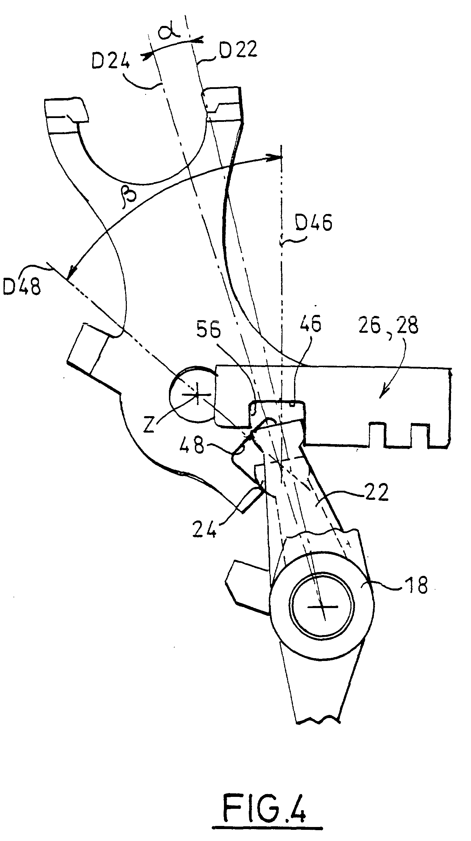

On a représenté aux figures 1 et 2 des grilles 10 et 12 de changement de vitesses d'un véhicule automobile destinées à guider un levier (non représenté) des changement des rapports d'une boîte de vitesses manuelle présentant cinq rapports de marche avant repérés sur les figures par les chiffres "1", "2", "3", "4", et "5" et un rapport de marche arrière repéré par les lettres "AR".

De manière connue, la sélection des rapports peut être obtenue en déplaçant le levier par rapport à la grille suivant la direction transversale "T" jusqu'à une position de sélection d'au moins un rapport, et l'engagement d'un rapport peut être obtenu en déplaçant le levier suivant la direction longitudinale "L" dans un sens déterminé à partir de ladite position de sélection.

De manière connue, il existe des grilles de changement des vitesses du type de la grille 10 qui sont communément appelées grilles "en chandelier". De telles grilles 10 comportent des paires de rapports, - ici la paire de rapports "1" et "2" et la paire de rapports "3" et "4" qui sont agencés transversalement de part et d'autre d'un point central "PM" dit "de point mort". Les rapports de chaque paire de rapports sont agencés longitudinalement suivant la direction "L", de part et d'autre d'une ligne "S" transversale de sélection passant par le point central "PM" de point mort, et sont aussi alignés suivant une ligne "C" dite de crabotage. Un rapport de marche avant, par exemple le cinquième rapport "5" de marche avant, et le rapport de marche arrière 'AR" sont décalés transversalement aux extrémités transversales de la grille 10. Une ligne "C" de crabotage est spécifiquement associée à chacun de ces, les autres rapports "1", "2", "3", "4" étant associés par paires à une ligne "C" de crabotage propre.

Une telle grille 10 de changement des vitesses est particulièrement encombrante transversalement.

Pour remédier à cet inconvénient, on a proposé des grilles de changement des vitesses du type de la grille 12 qui est représentée à la figure 2, plus connues sous le nom de grilles "en H".

A la différence des grilles dites en chandelier, de telles grilles 12 comportent seulement des paires de rapports qui sont agencées transversalement de part et d'autre du point central PM dit "de point mort". Les rapports de chaque paire sont agencés longitudinalement sur une même ligne de crabotage "C" suivant la direction "L", de part et d'autre de la ligne transversale "S" de sélection passant par le point central "PM" de point mort. Ainsi, dans l'exemple qui a été représenté à la figure 2, la grille 12 comporte trois paires de rapports, une paire pour les rapports "1" et "2", une paire pour les rapports "3" et "4", et une paire pour les rapports "5" et "AR".

Dans une telle grille 12 de sélection, le rapport "AR" de marche arrière procédant d'une inversion du sens de rotation par rapport au rapport "5" de marche avant, ce rapport "AR" nécessite d'être actionné par un dispositif de crabotage qui ne saurait être le même que celui d'un des rapport de marche avant "1", "2", "3", "4" ou "5". Le rapport "AR" de marche arrière peut par exemple être craboté par une fourchette qui commande le déplacement d'un pignon surnuméraire permettant d'inverser le sens de rotation de l'arbre de sortie de la boîte. De ce fait, dans une telle boîte, le mouvement du levier selon ses deux positions longitudinales extrêmes opposées le long de la ligne "C" de crabotage qui permet le passage des rapports "5" et "AR" doit permettre de commander deux dispositifs indépendants de crabotage.

Un tel dispositif 14 a été représenté à la figure 3 conformément à l'invention.

De manière connue, le dispositif 14 est destiné à assurer la commande du changement des rapports d'une boîte de vitesses (non représentée) de véhicule automobile. La boîte de vitesses comporte au moins deux arbres parallèles (non représentés) entre lesquels sont agencés au moins quatre engrenages qui sont constitués chacun d'un pignon fou engrenant en permanence avec un pignon fixe associé (non représenté). Chaque pignon fou est susceptible d'être craboté sur son arbre par l'intermédiaire d'une extrémité d'une fourchette de commande dont l'autre extrémité libre comporte une fourche de contact, qui est susceptible de recevoir au moins un doigt qui s'étend radialement à partir du corps cylindrique 16 d'un actionneur 18.

L'actionneur 16 est susceptible d'être commandé en coulissement le long de son axe X pour sélectionner au moins une fourche associée à une fourchette, puis d'être commandé en rotation autour de son axe X pour pousser la fourche suivant une direction de mobilité de la fourchette, et dans un sens déterminé, afin d'engager le rapport associé à la fourchette et au sens déterminé.

Conformément à l'invention, l'actionneur 18 comporte un premier doigt 20 , un deuxième doigt 22 et un troisième doigt 24 qui s'étendent à partir de son corps cylindrique 16.

Le premier doigt 20 est susceptible de commander le crabotage d'au moins deux pignons fous associés à au moins deux fourchettes principales indépendantes 26 et 28 dont on aperçoit les extrémités libres 30 et 32 sur la figure 3. Ainsi, par exemple, le premier doigt est susceptible de commander le crabotage d'un premier et d'un deuxième rapports de marche avant par l'intermédiaire de la fourchette principale 26 et de commander le crabotage d'un troisième et d'un quatrième rapports de marche avant par l'intermédiaire de la fourchette principale 28.

Le deuxième doigt 22 est associé au crabotage d'un pignon fou associé à une fourchette supplémentaire 34 indépendante dont on aperçoit l'extrémité libre 36. Ainsi la fourchette supplémentaire 34 est par exemple associée au crabotage d'un cinquième rapport de marche avant.

Le troisième doigt 24 est associé au crabotage d'un pignon fou associé à une fourchette supplémentaire 38 indépendante dont on aperçoit l'extrémité libre 40. Ainsi la fourchette supplémentaire 38 est par exemple associée au crabotage d'un rapport de marche arrière.

Sur la figure 3, la liaison de chacune des fourchettes 26, 28, 34, ou 38 avec le pignon fou correspondant n'a pas été représentée mais il sera compris que tout type de mouvement des fourchettes 26, 28, 34, ou 38 peut être envisagé sans restreindre la portée de l'invention.

D'une manière analogue, le dispositif 14 qui a été représenté à la figure 3 est associé à la commande d'une boîte de vitesses comportant cinq rapports de marche avant, mais il sera compris que le même dispositif 14 pourrait être appliqué à la commande d'une boîte de vitesses comportant un nombre inférieur ou supérieur de rapports de démultiplication, ceux ci étant en tout état de cause commandés par l'intermédiaire du premier doigt 20 et d'une fourchette principale associée. Par exemple, dans le cas d'une boîte de vitesses à sept rapports de démultiplication, le dispositif 10 comporterait une fourchette principale de plus.

La commande de chaque fourchette par le doigt correspondant est réalisé au moyen d'une fourche solidaire de chaque fourchette. Plus particulièrement, les extrémités libres 30, 32, 36 et 40 des fourchettes 26, 28, 34 et 38 présentent la forme de plaques parallèles qui sont mobiles les unes par rapport aux autres dans des plans parallèles suivant une direction Y qui est transversale à la direction axiale X de l'actionneur 18. Les bords des plaques comportent des découpes délimitant les fourches dans lesquelles sont reçus les doigts. Ainsi, les extrémités libres 30, 32, 36 et 40 des fourchettes 26, 28, 34 et 38 comportent des découpes délimitant respectivement des fourches 42, 44 , 46 et 48.

Chaque découpe des fourches 42, 44, 46 ou 48 présente sensiblement la forme d'un U qui est tourné vers l'extérieur de la plaque correspondante et l'extrémité de chaque doigt 20, 22 ou 24 comporte une touche 50, 52 et 54 associée en forme de portion de cylindre dont l'axe est parallèle à l'axe X de l'actionneur et dont le diamètre correspond à l'écartement des branches du U de la fourche 42, 44, ou 46 associée. Ainsi chaque doigt 20, 22 ou 24 peut être sans jeu entre les branches de la fourche 42, 44, ou 46 associée pendant au moins une partie de la course de rotation de l'actionneur autour de l'axe X, de manière à permettre l'entraînement de la fourchette 30, 32, 34 ou 38 associée en position de crabotage et son rappel en position de repos. Cette configuration sera explicitée plus en détail en référence aux figures 4 à 17.

Par ailleurs, dans le mode de réalisation préféré de l'invention, les plaques des fourchettes principales 26 et 28 et la plaque de la fourchette supplémentaire 34 sont montées coulissantes suivant une direction Y qui est perpendiculaire à l'axe X de rotation de l'actionneur 16, et la plaque de la fourchette supplémentaire 38 est montée pivotante autour d'un axe Z qui est décalé parallèlement à l'axe X de rotation de l'actionneur 16. Ainsi, le premier doigt 20 est associé à la commande des plaques coulissantes des fourchettes 26 et 28, tandis que les deuxième et troisième doigts 22 et 24 sont respectivement associés aux commandes des plaques coulissante et pivotante des fourchettes supplémentaires 34 et 38.

Conformément à l'invention, la boîte comporte des moyens mécaniques d'échappement qui sont destinés à permettre aux autres doigts, lorsqu'un doigt 20, 22 ou 24 actionne une fourche 42, 44, 46 ou 48 déterminée pour craboter un pignon fou associé, de sortir des fourches autres que la fourche déterminée.

A cet effet, comme l'illustre la figure 3, les moyens mécaniques d'échappement comportent tout d'abord au moins un jeu axial "J" d'échappement qui est agencé, suivant la direction X de coulissement de l'actionneur, entre l'ensemble des plaques des fourchettes principales 26 et 28 et l'ensemble des plaques des fourchettes supplémentaires 34 et 38, et dont la valeur correspond à la valeur maximale de l'encombrement, pris suivant la direction axiale X de l'actionneur, qu'est susceptible d'occuper l'ensemble des plaques des fourchettes principales 26 et 28 ou l'ensemble des plaques des fourchettes supplémentaires 34 ou 38.

De la sorte, le premier doigt 20 ne peut être reçu dans l'une ou l'autre des fourches 42 ou 44 des fourchettes principales 26 ou 28 dès lors que les deuxième doigts 22 et troisième doigts 24 sont tous deux situés axialement au niveau des fourches 46 et 48 des fourchettes supplémentaires 34 et 38, et réciproquement.

Ainsi, lorsque le déplacement de l'actionneur 16 positionne le premier doigt 20 dans la fourche 42 ou dans la fourche 44, les deuxième et troisième doigts 22 et 24 sont positionnés axialement entre l'ensemble des fourchettes 26 et 28 et l'ensemble des fourchettes 34 et 38, de sorte qu'ils ne peuvent craboter aucun rapport. De même, lorsque le déplacement de l'actionneur 16 positionne simultanément les deuxième et troisième doigts 22 et 24 en regard des fourches associées 34 et 38, le premier doigt 20 est positionné axialement entre l'ensemble des fourchettes 26 et 28 et l'ensemble des fourchettes 34 et 38, de sorte qu'il ne peut craboter aucun rapport. Cette configuration constitue une partie des moyens de sélection des rapports de la boîte de vitesses.

De plus, comme l'illustre la figure 4, les moyens d'échappement comportent un angle "α" dit d'échappement, pris dans un plan transversal à la direction axiaie de l'actionneur, entre la direction générale D₂₂ du deuxième doigt 22 et la direction générale D₂₄ du troisième doigt 24, qui est inférieur à un angle "β" dit de repos qui est formé, dans la position de repos des fourchettes supplémentaires 34 et 38 pour laquelle aucun rapport n'est engagé, par les directions générales D₄₆ et D₄₈ des fourches en U des fourchettes supplémentaires 34 et 38.

Les moyens d'échappement comportent aussi une configuration dite d'échappement des fourches 46 et 48 en U des fourchettes supplémentaires 34 et 38, selon laquelle :
- la direction générale de la fourche 48 en U de la plaque pivotante de la fourchette 38 coupe l'axe Z de rotation de ladite plaque pivotante, et
- la branche 46b de la fourche 46 en U de la plaque coulissante qui est tournée du côté de l'axe Z de rotation de la plaque pivotante est plus courte que l'autre branche 46a de ladite fourche 46 pour fournir un dégagement sur le bord de ladite plaque coulissante,

Cette configuration d'échappement permet que, lors de la rotation de l'actionneur 18, le deuxième doigt 22 quitte la fourche 46 de la fourchette 34 supplémentaire associée dès lors que le troisième doigt 24 vient au contact d'au moins une branche de la fourche 48 en U de la fourchette 38 supplémentaire associée, et réciproquement.

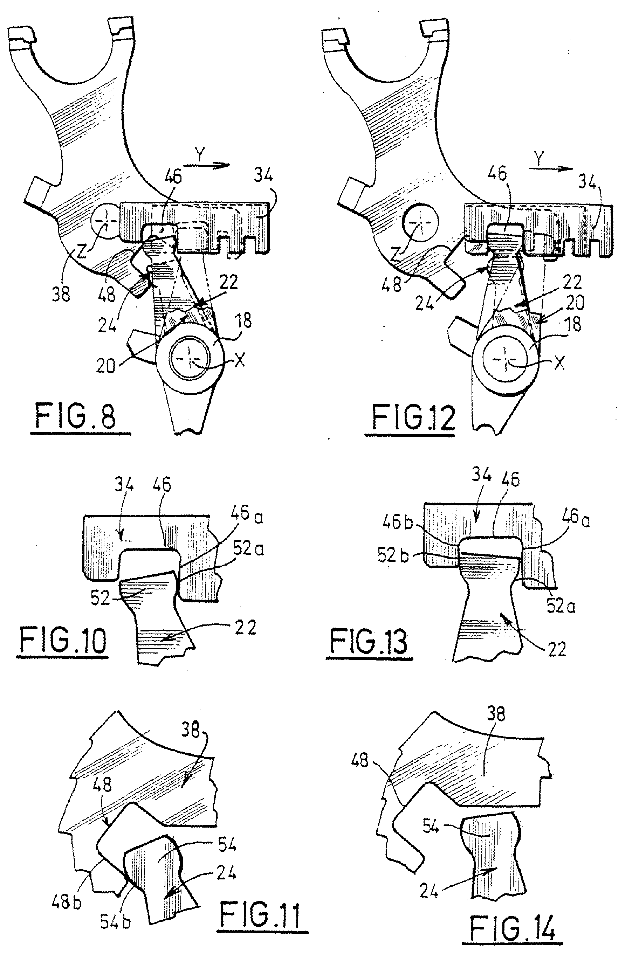

Comme on l'explicitera ultérieurement en référence aux figures 8 à 17, cette configuration permet l'échappement du doigt 22 ou du doigt 24, sélectivement en fonction du sens de rotation de l'actionneur autour de son axe X, hors de la fourche 46 ou 48 correspondante.

Le fonctionnement du dispositif 10 est maintenant explicité en référence aux figures 5 à 17.

Dans la position angulaire de point mort de l'actionneur qui a été représentée la figure 3 et qui est aussi représentée à la figure 5, l'actionneur 18 est mobile le long de son axe X suivant trois positions de sélection de rapports.

Dans une première position de sélection qui est représentée à la figure 5, l'actionneur 16 est positionné axialement le long de son axe X de manière que le premier doigt 20 soit reçu dans la fourche 42 de la fourchette 26.

Dans une deuxième position de sélection qui est représentée à la figure 5 et à la figure 3, l'actionneur 16 est positionné axialement le long de son axe X de manière que le premier doigt 20 soit reçu dans la fourche 44 de la fourchette 28.

Dans le même temps, comme l'illustre la figure 3, le deuxième doigt 22 et le troisième doigt 24 sont localisés dans le jeu J entre le jeu de plaques des fourchettes principales 26, 28 et le jeu de plaques des fourchettes supplémentaires 34 et 38, et de la sorte ils ne peuvent pas participer au crabotage.

La rotation de l'actionneur 18 dans un sens ou dans l'autre, à partir d'une de ces deux positions, est susceptible de provoquer le crabotage sélectif de l'un des quatre premiers rapports de transmission de la boîte de vitesses.

Dans le mode de réalisation préféré de l'invention, la fourchette principale 26 est associée aux premier et troisième rapports de marche avant, et la fourchette principale 28 est associée aux deuxième et quatrième rapports de marche avant.

Ainsi, comme l'illustre la figure 6, lorsque l'actionneur 18 est pivoté dans le sens horaire, il est susceptible de provoquer le crabotage du premier ou du troisième rapport de marche avant, selon que le doigt 20 a été préalablement reçu, dans la position de point mort de l'actionneur 18, dans la fourche 42 de la fourchette 26 ou dans la fourche 44 de la fourchette 28.

De même, comme l'illustre la figure 7, lorsque l'actionneur 18 est pivoté dans le sens anti-horaire, il est susceptible de provoquer le crabotage du deuxième ou du quatrième rapport de marche avant, selon que le doigt 20 a été préalablement reçu, dans la position de point mort de l'actionneur 18, dans la fourche 42 de la fourchette 26 ou dans la fourche 44 de la fourchette 28.

Dans les deux cas, la rotation de l'actionneur 16 provoque un coulissement de la plaque considérée suivant la direction Y. La transformation du mouvement de rotation en mouvement de coulissement est rendu possible par la configuration en cylindre de la touche 50 du premier doigt 20 qui coopère avec les bords en U des fourches 42 ou 44.

Dans une troisième position de sélection qui est représentée aux figures 8 à 17, l'actionneur 16 est positionné axialement le long de son axe X de manière que le deuxième doigt 22 et le troisième doigt 24 soient reçus simultanément et respectivement dans la fourche 46 de la fourchette supplémentaire 34 et dans la fourche 48 de la fourchette supplémentaire 38.

Dans le même temps, le premier doigt 20 est localisé dans le jeu J entre le jeu de plaques des fourchettes principales 26, 28 et le jeu de plaques des fourchettes supplémentaires 34 et 38, et de la sorte ne peut participer au crabotage.

En effet, dans la position de point mort de l'actionneur 18 qui est représentée aux figures 8 et 9, le deuxième doigt 22 n'est reçu que partiellement dans la fourche 52 de la fourchette supplémentaire 34, comme représenté à la figure 10, et le troisième doigt 24 n'est reçu que partiellement dans la fourche 54 de la fourchette supplémentaire 38, comme représenté à la figure 11.

En particulier, comme l'illustre la figure 10, dans la position de point mort de l'actionneur 18, une face 52a du deuxième doigt 22, tournée vers l'axe X, est au contact d'une branche 46a de la fourche 46 de la fourchette supplémentaire 34, tandis qu'une face 52b du deuxième doigt 22, tournée vers l'axe Z, est libre. Par ailleurs, comme l'illustre la figure 11, une face 54b du troisième doigt 24, tournée vers l'axe Z, est au contact d'une branche 48b de la fourche 48 de la fourchette supplémentaire 38, tandis qu'une face 54a du troisième doigt 24, tournée vers l'axe X, est libre.

La rotation de l'actionneur 18 dans un sens ou dans l'autre est susceptible de provoquer le crabotage sélectif du cinquième rapport de marche avant ou du rapport de marche arrière.

Comme l'illustrent les figures 12 à 14, la rotation de l'actionneur 18 dans le sens horaire à partir de la position de repos précédemment décrite amène la touche 52 du deuxième doigt 22 à pénétrer entièrement dans la fourche 46 de la fourchette supplémentaire 34 et permet l'entraînement de ladite fourchette supplémentaire 34 cependant que la face 54b de la touche 54 du troisième doigt 24 quitte son appui sur la branche 48b de la fourche 48 de la fourchette supplémentaire 38, laissant ladite fourchette 38 inactive.

En particulier, la face 52b de la touche 52 du doigt 22 vient au contact d'une face 46b de la fourche 46 de la fourchette 34 et permet son entraînement en coulissement.

La rotation de l'actionneur 18 dans le sens horaire est alors transformée en mouvement de coulissement suivant la direction Y de la fourchette 34, ce qui permet par exemple le crabotage du cinquième rapport de marche avant de la boîte de vitesses.

Il convient de remarquer que la touche 54 peut s'échapper de la fourche 48 de la fourchette supplémentaire 38 parce que la direction générale de la fourche 48 en U de la plaque pivotante de la fourchette 38 coupe l'axe Z de rotation de ladite plaque pivotante, et car l'angle "α" d'échappement entre les deuxième doigt 22 et du troisième doigt 24 est inférieur à l'angle "β" de repos formé par les directions générales des fourches en U des fourchettes supplémentaires 34 et 38. Cet agencement fournit une possibilité de dégagement à la touche 54 du doigt 24.

Comme l'illustrent les figures 8 à 11, la rotation de l'actionneur 18 dans le sens anti-horaire amène la face 52b de la touche 52 du deuxième doigt 22 à ramener la fourchette 34 en la laissant inactive. Puis, la face 52b quitte son appui sur la branche 46b de la fourche 46 de la fourchette 34 cependant que la face 54b de la touche 54 revient en appui contre la branche 48b de la fourchette supplémentaire 38. Les fourchettes 34 et 38 sont alors de nouveau en position de point mort.

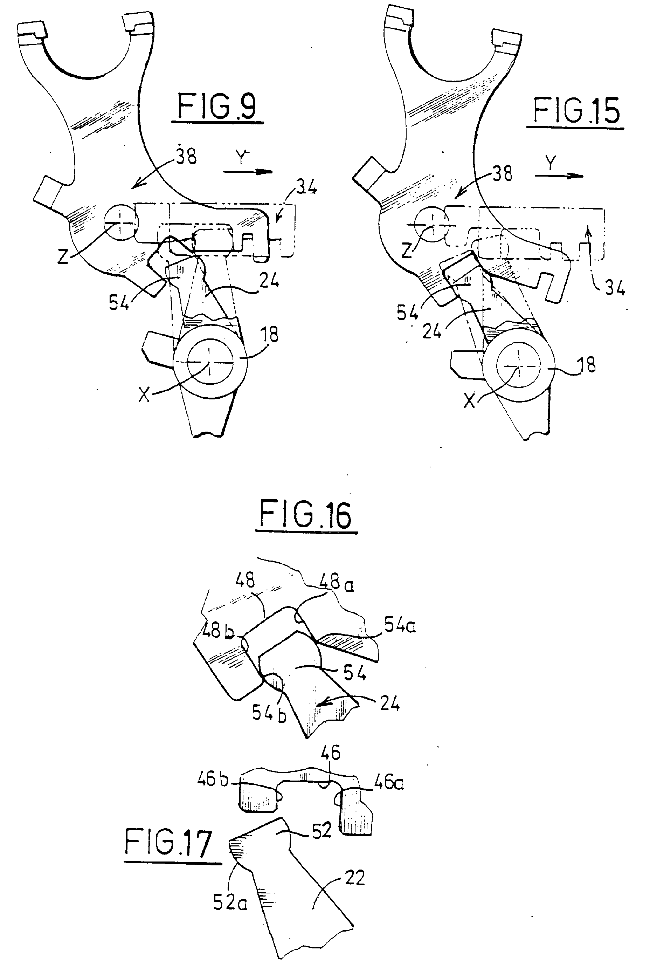

Comme l'illustrent les figures 15 à 17, la rotation de l'actionneur 18 dans le sens anti-horaire à partir de la position de repos précédemment décrite amène la touche 54 du troisième doigt 24 à pénétrer entièrement dans la fourche 48 de la fourchette supplémentaire 38 et permet l'entraînement de ladite fourchette supplémentaire 38 cependant que la face 52a de la touche 52 du deuxième doigt 22 quitte son appui sur la branche 46a de la fourche 44 de la fourchette supplémentaire 34, laissant ladite fourchette 34 inactive.

En particulier, la face 54a de la touche 54 du doigt 24 vient au contact d'une face 48a de la fourche 48 de la fourchette 38 et permet son entraînement en rotation autour de l'axe Z.

La rotation de l'actionneur 18 dans le sens anti-horaire est alors transformée en mouvement de rotation autour de l'axe Z dans le sens horaire, ce qui permet par exemple le crabotage du rapport de marche arrière de la boîte de vitesses.

Il convient de remarquer que la touche 52 peut s'échapper de la fourche 46 de la fourchette supplémentaire 34 parce que la branche 46b de la fourche 46 en U qui est tournée du côté de l'axe Z de rotation de la plaque pivotante est plus courte que l'autre branche 46a de ladite fourche 46 pour fournir un dégagement sur le bord de la plaque coulissante de la fourchette 34, et car l'angle "α" d'échappement entre les deuxième doigt 22 et troisième doigt 24 est inférieur à l'angle "β" de repos formé par les directions générales des fourches en U des fourchettes supplémentaires 34 et 38. Cet agencement fournit une possibilité de dégagement à la touche 52 du doigt 22.

Comme l'illustrent les figures 8 à 11, la rotation de l'actionneur 18 dans le sens horaire amène la face 54a de la touche 54 du troisième doigt 24 à ramener la fourchette 38 en la laissant inactive. Puis la face 54a quitte son appui sur la branche 48a de la fourche 48 de la fourchette 38 cependant que la face 52a de la touche 52 revient en appui contre la branche 46a de la fourchette supplémentaire 34. Les fourchettes 34 et 38 sont alors de nouveau en position de point mort.

L'invention permet avantageusement de réaliser une commande simple, fiable et peu coûteuse du crabotage des rapports d'une boîte de vitesses.

## Revendications

1. Boîte de vitesses de véhicule automobile, du type comportant au moins deux arbres parallèles entre lesquels sont agencés au moins quatre engrenages constitués chacun d'un pignon fou engrenant en permanence avec un pignon fixe associé, et du type dans lequel chaque pignon fou est susceptible d'être craboté sur son arbre par l'intermédiaire d'une extrémité d'une fourchette (26, 28, 34, 38) de commande dont l'autre extrémité libre (30, 32, 36, 40) comporte une fourche (42, 44, 46, 48) de contact, qui est susceptible de recevoir au moins un doigt (20, 22, 24) qui s'étend radialement à partir du corps cylindrique (16) d'un actionneur (18), qui est susceptible d'être commandé en coulissement le long de son axe (X) pour sélectionner au moins une fourche (42, 44, 46, 48) associée à une fourchette (26, 28, 34, 38), puis d'être commandé en rotation autour de son axe (X) pour pousser la fourche (42, 44, 46, 48) suivant une direction de mobilité de la fourchette (26, 28, 34, 38) et dans un sens déterminé et engager ainsi le rapport associé à la fourche (42, 44, 46, 48) et au sens déterminé, **caractérisée en ce que** l'actionneur comporte trois doigts (20, 22, 24) dont un premier doigt (20) est susceptible de commander le crabotage d'au moins deux pignons fous associés à au moins deux fourchettes principales (26, 28) indépendantes et dont des deuxième (22) et troisième (24) doigts sont chacun associés respectivement au crabotage de pignons fous associés à deux fourchettes supplémentaires (34, 38) indépendantes, et **en ce que** la boîte comporte des moyens mécaniques d'échappement destinés à permettre aux autres doigts, lorsqu'un doigt actionne une fourche déterminée pour craboter un pignon fou associé, de sortir des fourches autres que la fourche déterminée.

2. Boîte de vitesses selon la revendication précédente, **caractérisée en ce que** les extrémités libres (30, 32, 36, 40) des fourchettes (26, 28, 34, 38) présentent la forme de plaques parallèles qui sont mobiles les unes par rapport aux autres dans des plans parallèles transversalement par rapport à la direction axiale (X) de l'actionneur (18) et aux bords desquelles sont agencées des découpes délimitant les fourches (42, 44, 46, 48) dans lesquelles sont reçus les doigts (20, 22, 24).

3. Boîte de vitesses selon la revendication précédente, **caractérisée en ce que** les moyens mécaniques d'échappement comportent au moins un jeu axial (J) d'échappement qui est agencé, suivant la direction (X) de coulissement de l'actionneur (18), entre l'ensemble des plaques des fourchettes principales (26, 28) et l'ensemble des plaques des fourchettes supplémentaires (34, 38) et dont la valeur correspond à la valeur maximale de l'encombrement, pris suivant la direction axiale (X) de l'actionneur, qu'est susceptible d'occuper l'ensemble des plaques des fourchettes principales (26, 28) ou l'ensemble des plaques des fourchettes supplémentaires (34, 38), et qui est destiné à ce que le premier doigt (20) ne puisse être reçu dans l'une ou l'autre des fourches (42, 44) des fourchettes principales (26, 28) dès lors que les deuxième (22) et troisième (24) doigts sont tous deux situés axialement au niveau des fourches (46, 48) des fourchettes supplémentaires (34, 38), et réciproquement.

4. Boîte de vitesses selon l'une des revendications 2 ou 3, **caractérisée en ce que** les plaques des fourchettes principales (26, 28) et une des plaques des fourchettes supplémentaires (34) sont montées coulissantes suivant une direction (Y) perpendiculaire à l'axe (X) de rotation de l'actionneur (18) et **en ce que** l'autre plaque des fourchettes supplémentaires (38) est montée pivotante autour d'un axe (Z) qui est décalé parallèlement à l'axe de rotation (X) de l'actionneur (18).

5. Boîte de vitesses selon l'une des revendications 2 à 4, **caractérisée en ce que** chaque découpe présente sensiblement la forme d'un U et **en ce que** l'extrémité de chaque doigt (20, 22, 24) comporte une touche (50, 52, 54) en forme de portion de cylindre dont l'axe est parallèle à l'axe (X) de l'actionneur (18) et dont le diamètre correspond à l'écartement des branches du U de la fourche (42, 44, 46, 48) associée, pour que chaque doigt (20, 22, 24) soit reçu sans jeu entre les branches de la fourche (42, 44, 46, 48) associée pendant au moins une partie de la course de rotation de l'actionneur (18), de manière à permettre l'entraînement de la fourchette (26, 28, 34, 38) associée en position de crabotage et son rappel en position de repos.

6. Boîte de vitesses selon l'une des revendications 4 ou 5, **caractérisée en ce que** les deuxième (22) et troisième (24) doigts sont respectivement associés aux commandes des plaques coulissante et pivotante des fourchettes supplémentaires (34, 38).

7. Boite de vitesses selon la revendication précédente prise en combinaison avec les revendications 4 et 5, **caractérisée en ce que** les moyens d'échappement comportent:
- un angle (α) dit d'échappement, pris dans un plan transversal à la direction axiale (X) de l'actionneur (18), entre les deuxième (22) et troisième (24) doigts, qui est inférieur à un angle (β) dit de repos qui est formé, dans la position de repos des fourchettes supplémentaires (34, 38) pour laquelle aucun rapport n'est engagé, par les directions générales (D₄₆, D₄₈) des fourches en U des fourchettes supplémentaires (46, 48), et
- une configuration dite d'échappement des fourches (46, 48) en U des fourchettes supplémentaires (34, 38), selon laquelle:
• la direction générale (D₄₈) de la fourche (48) en U de la plaque pivotante coupe l'axe (Z) de rotation de ladite plaque pivotante, et
• la branche (46b) de la fourche (46) en U de la plaque coulissante qui est tournée du côté de l'axe (Z) de rotation de la plaque pivotante est plus courte que l'autre branche (46a) de ladite fourche (46) pour fournir un dégagement sur le bord de ladite plaque coulissante, de manière que, lors de la rotation de l'actionneur (18), le deuxième doigt (22) quitte la fourche (46) de la fourchette (34) supplémentaire associée dès lors que le troisième doigt (24) vient au contact d'au moins une branche de la fourche (48) en U de la fourchette supplémentaire (38) associée, et réciproquement.
